# EUROPEAN PATENT APPLICATION

(11) **EP 4 783 004 A1**
(43) Date of publication of application: **29.07.2026**
(21) Application number: 24941572.0
(22) Date of filing: 19.12.2024
(51) Int. Cl.: G06F 9/50

(54) **RESOURCE CONTROL METHOD AND APPARATUS, AND DEVICE**

(30) Priority: 31.05.2024 CN 202410708211
(71) Applicant: HUAWEI TECHNOLOGIES CO., LTD., Shenzhen 518129 (CN)
(72) Inventor: LI, Xiang, Shenzhen, Guangdong 518129 (CN); ZHOU, Weilai, Shenzhen, Guangdong 518129 (CN); QIU, Ge, Shenzhen, Guangdong 518129 (CN); LIU, Chungang, Shenzhen, Guangdong 518129 (CN); WANG, Xiayang, Shenzhen, Guangdong 518129 (CN); SUN, Cai, Shenzhen, Guangdong 518129 (CN); CAO, Yue, Shenzhen, Guangdong 518129 (CN)
(74) Representative: Goddar, Heinz J.
(86) International application number: PCT/CN2024/140688
(87) International publication number: WO 2025/246305

(57) **Abstract**

This application provides a resource control method and apparatus, and a device, and relates to the field of terminal communication technologies. The method includes: An electronic device may obtain load information, where the load information is used to represent resource usage corresponding to tasks in a first task group and a second task group, the first task group includes a real-time task corresponding to an application currently interacting with a user, and a first resource threshold corresponding to the first task group is greater than a second resource threshold corresponding to the second task group; and when the load information meets a first condition, adjust the first resource threshold corresponding to the first task group to a third resource threshold and adjust the second resource threshold corresponding to the second task group to a fourth resource threshold. Tasks are divided into different groups and resource thresholds corresponding to the groups are dynamically adjusted, so that resource allocation corresponding to an important real-time task can be ensured, and a case like frame freezing can be avoided, to dynamically manage resources. Therefore, system stability and performance and user experience are improved.

## Description

This application claims priority to Chinese Patent Application No. 202410708211.4, filed with the China National Intellectual Property Administration on May 31, 2024 and entitled "RESOURCE CONTROL METHOD AND APPARATUS, AND DEVICE", which is incorporated herein by reference in its entirety.

### TECHNICAL FIELD

This application relates to the field of terminal communication technologies, and in particular, to a resource control method and apparatus, and a device.

### BACKGROUND

With continuous development of electronic devices, a plurality of types of tasks run on the electronic devices. A device system includes system resources such as central processing unit (central processing unit, CPU) resources, network resources, and memory resources, to be allocated to the tasks for use. Currently, if a background application on the device creates a large quantity of background tasks and a foreground application creates a small quantity of foreground tasks, more resources are allocated to the background tasks, and fewer resources are allocated to the foreground tasks, resulting in a case like frame freezing. Consequently, the resources are abused, and system stability and performance and user experience are affected.

### SUMMARY

This application provides a resource control method and apparatus, and a device. According to the method, tasks are divided into different groups and resource thresholds corresponding to the groups are dynamically adjusted, so that resource allocation corresponding to an important real-time task can be ensured, and a case like frame freezing can be avoided, to dynamically manage resources. Therefore, system stability and performance and user experience are improved.

To achieve the foregoing objectives, the following technical solutions are used in this application.

According to a first aspect, this application provides a resource control method, applied to an electronic device. The electronic device includes a first task group and a second task group. The method includes: obtaining load information, where the load information is used to represent resource usage corresponding to tasks in the first task group and the second task group, the first task group includes a real-time task corresponding to an application currently interacting with a user, a first resource threshold corresponding to the first task group is greater than a second resource threshold corresponding to the second task group, and a resource threshold is used to represent maximum resource usage corresponding to a task in a task group; and when the load information meets a first condition, adjusting the first resource threshold corresponding to the first task group to a third resource threshold and adjusting the second resource threshold corresponding to the second task group to a fourth resource threshold.

In this way, on one hand, in this embodiment of this application, to satisfy a feature of interaction priority of a terminal, tasks can be divided into different groups, and a resource threshold of a task group including a real-time task can be set to a large value, so that system resources can be more flexibly allocated and limited subsequently based on features of the groups. When the second task group includes a large quantity of background tasks created by the application, in this embodiment of this application, a smaller resource threshold can be set for the second task group, and a larger resource threshold can be set for the first task group. On a basis that more resources are allocated to a task that affects user experience more, this can avoid a case in which a large quantity of resources are allocated to the large quantity of background tasks, thereby preventing resource abuse from affecting system stability.

On the other hand, in this embodiment of this application, resource thresholds corresponding to different groups can be dynamically adjusted and controlled based on load information corresponding to the different groups. In other words, when the load information meets the first condition, the electronic device can adjust, based on a system running status, the resource threshold corresponding to the first task group and the resource threshold corresponding to the second task group. For example, when a quantity of real-time tasks in the first task group increases and a quantity of common tasks in the second task group decreases, the resource threshold corresponding to the first task group can be increased. In this way, in this embodiment of this application, resource allocation corresponding to an important real-time task can be ensured, and a case like frame freezing can be avoided, to dynamically manage resources. Therefore, system stability and performance and user experience are improved.

In some implementations, in a process of adjusting the first resource threshold to the third resource threshold and adjusting the second resource threshold to the fourth resource threshold when the load information meets the first condition, in N consecutive preset periods, when a used resource amount of the first task group in the load information is greater than the first resource threshold, and a used resource amount of the second task group is less than the second resource threshold, the first resource threshold may be increased based on a first proportion, to obtain the third resource threshold, and the second resource threshold may be decreased based on the first proportion, to obtain the fourth resource threshold; or
in the N consecutive preset periods, when the used resource amount of the first task group is less than the first resource threshold, and the used resource amount of the second task group is greater than the second resource threshold, the first resource threshold may be decreased based on a second proportion, to obtain the third resource threshold, and the second resource threshold may be increased based on the second proportion, to obtain the fourth resource threshold, where N is greater than 1.

In this way, in this embodiment of this application, the load information in the N consecutive preset periods can be determined. In a scenario in which a used resource amount corresponding to a task group is greater than a resource threshold, the resource threshold of the task group is dynamically adjusted, so that more resources can be allocated to the task that affects user experience more, and running requirements of a foreground and a background of a mobile phone can be further met to a maximum extent. This satisfies a diversity of system running environments to a maximum extent, and ensures a running requirement of a mobile phone system.

In some implementations, the method further includes: The electronic device may determine the first proportion based on a difference between the used resource amount of the second task group and the second resource threshold; and the electronic device may further determine the second proportion based on a difference between the used resource amount of the first task group and the first resource threshold.

In this way, in this embodiment of this application, in a process of adjusting a resource threshold, when a used resource amount of a task group does not exceed the resource threshold, not all unused resources of all resources are allocated to a corresponding task group whose used resource amount exceeds a resource threshold. Instead, an appropriate proportion is determined based on a difference between the used resource amount and the resource threshold of the task group, to adjust the resource thresholds of the two task groups. In this way, the system resources are allocated as evenly as possible, and running requirements corresponding to the two task groups are met at the same time, thereby improving system stability and performance.

In some implementations, the method further includes: In every preset period, when the used resource amount of the first task group in the load information is greater than the first resource threshold, the electronic device may suspend execution of at least one unexecuted task in the first task group; and/or when the used resource amount of the second task group is greater than the second resource threshold, suspend execution of at least one unexecuted task in the second task group.

In this way, in this embodiment of this application, the task can be controlled in the preset period based on a running status of the task in the task group. Specifically, when the used resource amount of the task in the task group is greater than the resource threshold, execution of the at least one unexecuted task in the task group is suspended, to preferably schedule a task in another task group. This prevents a large quantity of background tasks from being created by a background application and occupying a large quantity of resources, and prevents resource abuse from affecting system stability and performance. Therefore, user experience is improved.

In some implementations, in a process of adjusting the first resource threshold to the third resource threshold and adjusting the second resource threshold to the fourth resource threshold when the load information meets the first condition, in N accumulated preset periods within preset duration, when a used resource amount of the first task group in the load information is greater than the first resource threshold, and a used resource amount of the second task group is less than the second resource threshold, the first resource threshold may be increased based on a first proportion, to obtain the third resource threshold, and the second resource threshold may be decreased based on the first proportion, to obtain the fourth resource threshold; or
in the N accumulated preset periods within the preset duration, when the used resource amount of the first task group is less than the first resource threshold, and the used resource amount of the second task group is greater than the second resource threshold, the first resource threshold may be decreased based on a second proportion, to obtain the third resource threshold, and the second resource threshold may be increased based on the second proportion, to obtain the fourth resource threshold, where N is greater than 1.

In this way, in this embodiment of this application, the load information in the N accumulated preset periods within the preset duration can be further determined. In the N accumulated preset periods within the preset duration, if a used resource amount of one task group in two task groups is greater than a corresponding resource threshold, and a used resource amount of the other task group is less than a corresponding resource threshold, the resource threshold of the corresponding task group whose used resource amount is greater than the resource threshold is increased, and the resource threshold of the corresponding task group whose used resource amount is less than the resource threshold is decreased. More resources can be allocated to the task that affects user experience more, and running requirements of a foreground and a background of a mobile phone can be further met to a maximum extent. Running requirements corresponding to different task groups are met to a maximum extent, thereby improving system stability and performance.

In some implementations, the method further includes: The electronic device may obtain the first task group and the second task group through division based on a task attribute of a task corresponding to the application, where the task attribute is used to represent a delay requirement corresponding to the task; and the electronic device may further obtain a running task corresponding to a currently started application, and add the running task to the first task group and the second task group based on a task attribute corresponding to the running task.

In this way, in this embodiment of this application, different task groups can be obtained through division based on the task attribute, and the running task corresponding to the currently started application can be added to the different groups, to facilitate association of a large quantity of running tasks. In addition, this helps the electronic device subsequently meet an interaction priority requirement in a resource allocation process. Therefore, user experience is improved.

In some implementations, the electronic device includes a plurality of second task groups. In the process of adjusting the first resource threshold corresponding to the first task group to the third resource threshold and adjusting the second resource threshold corresponding to the second task group to the fourth resource threshold, in the N consecutive preset periods, in the first task group and the plurality of second task groups, when a used resource amount of a first target task group is greater than a resource threshold corresponding to the first target task group, and a used resource amount of a second target task group is less than a resource threshold corresponding to the second target task group, the resource threshold of the first target task group may be increased based on a third proportion, and the resource threshold of the second target task group may be decreased based on the third proportion.

In this way, in this embodiment of this application, when there are a plurality of task groups, the load information in the N consecutive preset periods can also be determined. Resource thresholds of the plurality of task groups can be dynamically adjusted, so that running requirements corresponding to different task groups can be met to a maximum extent, and adjustment flexibility and system stability and performance are improved.

In some implementations, the first task group includes a first sub-task group and a second sub-task group. The first sub-task group corresponds to a first sub-resource threshold. The second sub-task group corresponds to a second sub-resource threshold. In a process of obtaining the load information, load information of the first sub-task group and load information of the second sub-task group may be obtained.

The method further includes: When the load information of the first sub-task group and the load information of the second sub-task group meet a second condition, the electronic device may further adjust the first sub-resource threshold corresponding to the first sub-task group to a third sub-resource threshold and adjust the second sub-resource threshold corresponding to the second sub-task group to a fourth sub-resource threshold.

In this way, in this embodiment of this application, next-level grouping can be further performed on different task groups, to further obtain different subgroups. Grouping can facilitate management of a large quantity of tasks. Similarly, sub-resource thresholds corresponding to different subgroups can also be dynamically adjusted. Therefore, adjustment flexibility is improved.

In some implementations, in a process of adjusting the first sub-resource threshold corresponding to the first sub-task group to the third sub-resource threshold and adjusting the second sub-resource threshold corresponding to the second sub-task group to the fourth sub-resource threshold when the load information of the first sub-task group and the load information of the second sub-task group meet the second condition, in the N consecutive preset periods, in the first sub-task group and the second sub-task group, when a used resource amount of a third target task group is greater than a resource threshold corresponding to the third target task group, and a used resource amount of a fourth target task group is less than a resource threshold corresponding to the fourth target task group, the resource threshold of the third target task group may be increased based on a fourth proportion, and the resource threshold of the fourth target task group may be decreased based on the fourth proportion.

In this way, in this embodiment of this application, in the N consecutive preset periods, when one sub-task group in the first sub-task group and the second sub-task group exceeds an upper limit, and the other sub-task group does not exceed an upper limit, a resource threshold of the corresponding sub-task group that exceeds the upper limit can be increased, and a resource threshold of the corresponding sub-task group that does not exceed the upper limit can be decreased. More resources can be allocated to the task that affects user experience more, the diversity of the system running environments can be satisfied to the maximum extent, and the running requirement of the mobile phone system can be ensured.

In some implementations, the resource threshold is a time slice threshold corresponding to a time slice of a central processing unit CPU core. The task is a process or a thread. The first task group includes the real-time task corresponding to the application currently interacting with the user. One task group in the second task groups includes a foreground task running in a foreground of the electronic device. One task group in the second task groups includes a background task running in a background of the electronic device.

In some implementations, a second resource threshold corresponding to the second task group including the foreground task is greater than a second resource threshold corresponding to the second task group including the background task.

In this way, the second resource threshold corresponding to the second task group including the foreground task is set to be greater than the second resource threshold corresponding to the second task group including the background task. More resources can be allocated to the task that affects user experience more, and the running requirements of the foreground and the background of the mobile phone can be further met to the maximum extent. Therefore, user experience is improved.

In some implementations, in a process of adding the running task to the first task group and the second task group, running tasks may be sorted in ascending order based on task identifiers of the running tasks, and added to the first task group and the second task group.

In this way, in this embodiment of this application, the running tasks are sorted in ascending order by using the task identifiers of the running tasks, so that a corresponding running task can be found more quickly. For example, retrieval can be performed according to a binary search algorithm, to improve search efficiency. In addition, it can also be convenient to subsequently collect statistics on resource usage corresponding to the running tasks in the first task group and the second task group, thereby improving statistics collection efficiency.

According to a second aspect, an embodiment of this application further provides a resource control apparatus. The resource control apparatus includes a parameter configuration module, a statistics collection module, a strategy management and control module, and a dynamic adjustment module.

The parameter configuration module is configured to configure a first resource threshold corresponding to a first task group and a second resource threshold corresponding to a second task group, where the first task group includes a real-time task corresponding to an application currently interacting with a user, the first resource threshold corresponding to the first task group is greater than the second resource threshold corresponding to the second task group, and a resource threshold is used to represent maximum resource usage corresponding to a task in a task group.

The statistics collection module is configured to obtain load information, where the load information is used to represent resource usage corresponding to tasks in the first task group and the second task group.

The strategy management and control module is configured to determine that the load information meets a first condition.

The dynamic adjustment module is configured to: when the load information meets the first condition, adjust the first resource threshold corresponding to the first task group to a third resource threshold and adjust the second resource threshold corresponding to the second task group to a fourth resource threshold.

In this way, the resource control apparatus provided in this embodiment of this application can set a smaller resource threshold for the second task group and set a larger resource threshold for the first task group. On a basis that more resources are allocated to a task that affects user experience more, this can avoid a case in which a large quantity of resources are allocated to a large quantity of background tasks, thereby preventing resource abuse from affecting system stability. In addition, the resource threshold is dynamically adjusted, so that resource allocation corresponding to an important real-time task can be ensured, and a case like frame freezing can be avoided, to dynamically manage resources.

According to a third aspect, an embodiment of this application further provides an electronic device. The electronic device includes a memory and one or more processors. The memory is coupled to the processor. The memory stores computer program code. The computer program code includes computer instructions. When the computer instructions are executed by the processor, the electronic device is enabled to perform the method according to the first aspect.

According to a fourth aspect, an embodiment of this application further provides a computer-readable medium. The computer-readable storage medium stores instructions. When the instructions are run on an electronic device, the electronic device is enabled to perform the method according to the first aspect.

According to a fifth aspect, an embodiment of this application further provides a computer program product. The computer program product includes instructions. When the instructions are run on a computer or a processor, the computer or the processor is enabled to perform the method according to the first aspect.

### BRIEF DESCRIPTION OF DRAWINGS

FIG. 1 is a diagram of a hardware structure of a mobile phone according to an embodiment of this application;
FIG. 2 is a diagram of a software structure of a mobile phone according to an embodiment of this application;
FIG. 3 is a diagram of a scenario of different task groups according to an embodiment of this application;
FIG. 4 is a schematic flowchart of performing dynamic management and control according to an embodiment of this application;
FIG. 5 is a schematic flowchart of limiting a task according to an embodiment of this application;
FIG. 6 is a schematic flowchart of adjusting a resource threshold according to an embodiment of this application;
FIG. 7 is a schematic flowchart of adjusting a first resource threshold and a second resource threshold according to an embodiment of this application;
FIG. 8 is a diagram of a scenario of a sub-task group according to an embodiment of this application;
FIG. 9 is a diagram of a structure of a resource control apparatus according to an embodiment of this application; and
FIG. 10 is a diagram of a structure of a mobile phone according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" indicates that associated objects are in an "or" relationship. For example, A/B may indicate A or B. In this application, "and/or" describes merely an association relationship between associated objects, and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically the same functions and purposes.

A person skilled in the art may understand that the terms such as "first" and "second" do not limit a quantity or an execution sequence, and the terms such as "first" and "second" do not indicate a definite difference. In addition, in some embodiments of this application, a term like "example" or "for example" is used to represent giving an example, an illustration, or a description. Any embodiment or design scheme described as an "example" or "for example" in embodiments of this application should not be construed as being more preferred or advantageous than another embodiment or design scheme. Exactly, use of the term like "example" or "for example" is intended to present a related concept in a specific manner for ease of understanding.

In addition, a device architecture and a business scenario described in embodiments of this application are intended to describe the technical solutions in embodiments of this application more clearly, and do not constitute a limitation on the technical solutions provided in embodiments of this application. A person of ordinary skill in the art may learn that, with evolution of the device architecture and emergence of a new business scenario, the technical solutions provided in embodiments of this application are also applicable to similar technical problems.

A time slice is running time allocated by a central processing unit (central processing unit, CPU) of an electronic device to each task. It may be understood that running time of the CPU is divided into many time segments, and a time segment is allocated to each task, and is referred to as a time slice of the task, namely, time during which the task is allowed to run.

A task is a series of device instructions that can achieve an objective. A task may be a process or a thread. Generally, a task corresponds to a series of device operations such as an input operation, a download operation, and an encoding/decoding operation. A process or a thread completes a task by performing device operations in the task.

A process is a running activity of a program on a device about a dataset, is a basic unit for a system to allocate resources, and is a foundation of an operating system structure. The process is a memory area that includes some resources. An operating system uses the process to divide its work into some functional units. One or more execution units included in the process are referred to as threads. The process further has a private virtual address space, and the space can be accessed only by the thread included in the process. The thread can belong to only one process and can access only a resource owned by the process. After the operating system creates a process, the process automatically applies for a thread named as a main thread or a primary thread.

An application is also referred to as an app. The application includes one or more processes that collaborate with each other.

With continuous development of electronic devices, a plurality of types of tasks run on the electronic devices. A device system includes system resources such as CPU resources, network resources, and memory resources, to be allocated to the tasks for use. Generally, a resource allocation strategy may schedule different types of tasks based on a sequence of obtaining the tasks or priorities of the tasks. For example, more resources are allocated to a busy task, and fewer resources are allocated to an idle task.

In this case, if a background application on the device creates a large quantity of background tasks and a foreground application creates a small quantity of foreground tasks, more resources are allocated to the background tasks, and fewer resources are allocated to the foreground tasks, resulting in a case like frame freezing. Consequently, the foregoing solution causes resource abuse, and affects system stability and performance and user experience.

To resolve the foregoing technical problem, embodiments of this application provide a resource control method and apparatus, and a device. The resource control method may be applied to an electronic device. The electronic device includes a first task group and a second task group. The method includes: The electronic device may obtain load information, where the load information is used to represent resource usage corresponding to tasks in the first task group and the second task group, the first task group includes a real-time task corresponding to an application currently interacting with a user, a first resource threshold corresponding to the first task group is greater than a second resource threshold corresponding to the second task group, and a resource threshold is used to represent maximum resource usage corresponding to a task in a task group; and when the load information meets a first condition, the electronic device may further adjust the first resource threshold corresponding to the first task group to a third resource threshold and adjust the second resource threshold corresponding to the second task group to a fourth resource threshold.

In this way, the electronic device provided in embodiments of this application includes the first task group and the second task group. The first task group includes the real-time task, and maximum resource usage of the first task group is greater than maximum resource usage of the second task group. When the load information meets the first condition, the electronic device can adjust the first resource threshold of the first task group to the third resource threshold and adjust the second resource threshold of the second task group to the fourth resource threshold. In other words, the electronic device can configure higher resource usage for the real-time task, and can further dynamically adjust the corresponding resource thresholds of the first task group and the second task when the resource usage corresponding to the first task group and the second task group meets the first condition.

The real-time task in the first task group may include a task corresponding to current interaction with the user, namely, a task having a time limit. The task in the second task group may be a common task (a non-real-time task), and may include a task having no time limit, for example, a task running in a background, or a task that is resident in a foreground and does not interact with the user.

On one hand, in embodiments of this application, to satisfy a feature of interaction priority of a terminal, tasks can be divided into different groups, and a resource threshold of a task group including a real-time task can be set to a large value, so that system resources can be more flexibly allocated and limited subsequently based on features of the groups. When the second task group includes a large quantity of background tasks created by the application, in embodiments of this application, a smaller resource threshold can be set for the second task group, and a larger resource threshold can be set for the first task group. On a basis that more resources are allocated to a task that affects user experience more, this can avoid a case in which a large quantity of resources are allocated to the large quantity of background tasks, thereby preventing resource abuse from affecting system stability.

On the other hand, in embodiments of this application, resource thresholds corresponding to different groups can be dynamically adjusted and controlled based on load information corresponding to the different groups. In other words, when the load information meets the first condition, the electronic device can adjust, based on a system running status, the resource threshold corresponding to the first task group and the resource threshold corresponding to the second task group. For example, when a quantity of real-time tasks in the first task group increases and a quantity of common tasks in the second task group decreases, the resource threshold corresponding to the first task group can be increased. In this way, in embodiments of this application, resource allocation corresponding to an important real-time task can be ensured, and a case like frame freezing can be avoided, to dynamically manage resources. Therefore, system stability and performance and user experience are improved.

The electronic device provided in embodiments of this application is a device like a terminal or a server. The terminal may include a mobile phone, a smartwatch, a tablet computer, a foldable electronic device, a desktop computer, a laptop computer, a handheld computer, a notebook computer, an ultra-mobile personal computer (Ultra-Mobile Personal Computer, UMPC), a netbook, a cellular phone, a personal digital assistant (Personal Digital Assistant, PDA), an augmented reality (Augmented Reality, AR) device, a virtual reality (Virtual Reality, VR) device, an artificial intelligence (Artificial Intelligence, AI) device, a wearable device, a vehicle-mounted device, and the like. The server may be a single server, or may be a server cluster including a plurality of servers.

The server may be an independent physical server, a server cluster or a distributed system including a plurality of physical servers, or a cloud server providing basic cloud computing services such as a cloud service, a cloud database, cloud computing, a cloud function, cloud storage, a network service, cloud communication, a middleware service, a domain name service, a security service, a CDN, big data, and an artificial intelligence platform. The terminal and the server may be directly or indirectly connected in a wired or wireless communication manner. This is not limited in this application. A specific type of the electronic device is not specially limited in embodiments of this application.

In addition, an operating system installed on the electronic device includes but is not limited to iOS^{®}, Android^{®}, HarmonyOS^{®}, Windows^{®}, Linux^{®}, or another operating system. The specific type of the electronic device and a type of the installed operating system are not limited in this application.

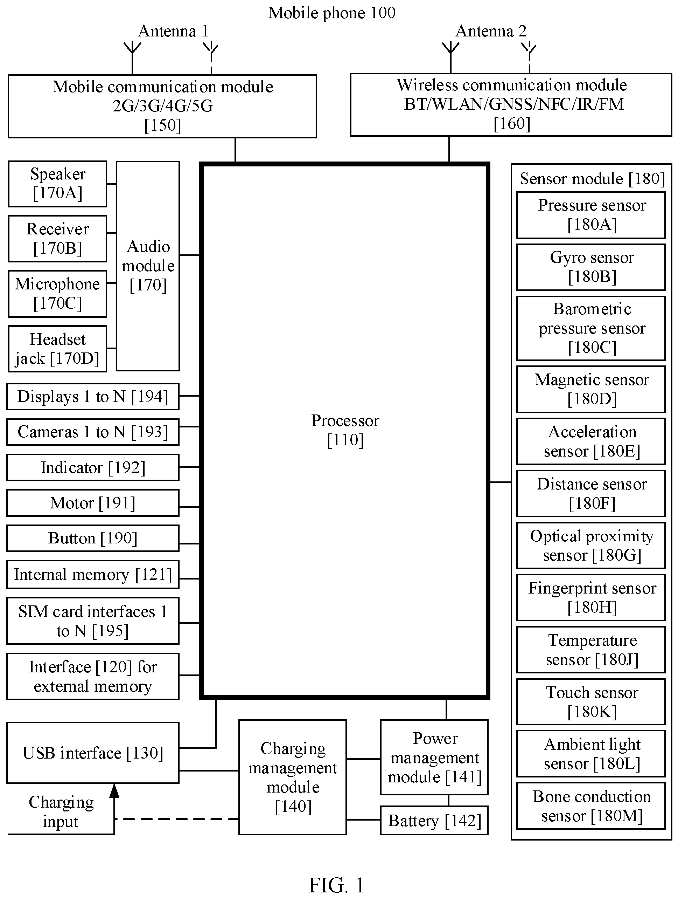

The following describes the method by using an example in which the resource control method is applied to the mobile phone as the electronic device. FIG. 1 is a diagram of a hardware structure of a mobile phone according to an embodiment of this application.

As shown in FIG. 1, the mobile phone 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The sensor module 180 may include sensors such as a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M.

It may be understood that the structure shown in this embodiment of the present invention does not constitute a specific limitation on the mobile phone 100. In some other embodiments of this application, the mobile phone 100 may include more or fewer components than those shown in the figure, or a combination of a part of the components, or splits from a part of the components, or an arrangement of different components. The components shown in the figure may be implemented by hardware, software, or a combination of the software and the hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a neural center and a command center of the mobile phone 100. The controller may generate an operation control signal based on an instruction operation code and a time sequence signal, to complete control of instruction fetching and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

A wireless communication function of the mobile phone 100 may be implemented via the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the mobile phone 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile phone 100 implements a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display a target interface and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like. In some embodiments, the mobile phone 100 may include one or N displays 194, where N is a positive integer greater than 1.

The mobile phone 100 may implement a photographing function via the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The mobile phone 100 may implement an audio function, for example, music playing or recording via the audio module 170, the speaker 170A, the receiver 170B, the microphone 170C, the headset jack 170D, the application processor, and the like.

In some embodiments, the processor 110 may configure a first task group and a second task group, and configure corresponding resource thresholds. The processor 110 may further obtain load information of the first task group and the second task group, and when the load information meets a first condition, adjust the resource thresholds corresponding to the first task group and the second task group.

A software system of the mobile phone 100 may use a layered architecture, an event-driven architecture, a microkernel architecture, a microservice architecture, or a cloud architecture. In embodiments of this application, an Android system with a layered architecture is used as an example to describe a software structure of the mobile phone 100.

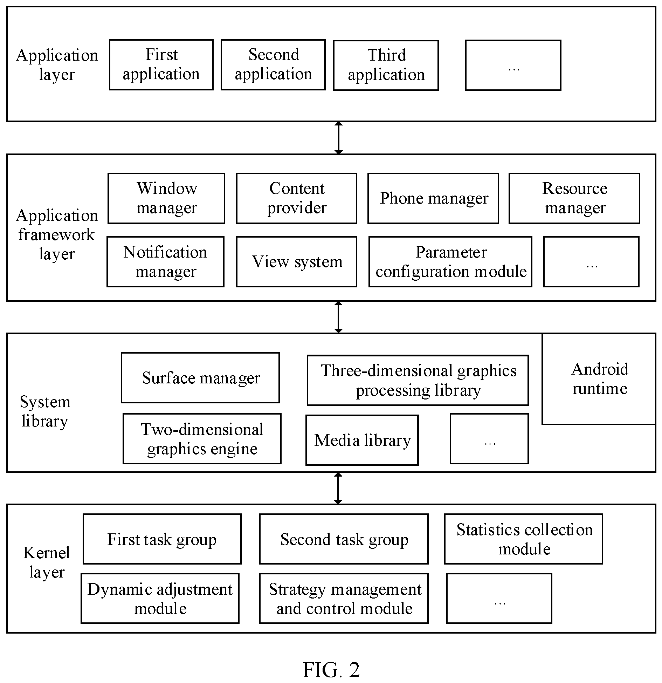

FIG. 2 is a diagram of the software structure of the mobile phone according to an embodiment of this application.

In the layered architecture, software is divided into several layers. Each layer has a clear role and task. The layers communicate with each other via a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as a first application, a second application, and a third application.

In some embodiments of this application, both the first application and the second application are foreground applications, and the third application may be a background application. The first application is an application corresponding to an operation currently being performed by a user, and the first application is visible to the user on a mobile phone side. It may be understood that a visible application is an application that can be seen by the user on the display of the mobile phone. The second application is a corresponding application that is currently running in a foreground of the mobile phone other than the first application. A background application is a corresponding application that runs in a background of the mobile phone. It should be noted that the first application, the second application, and the third application may be one type of application. Application types and application quantities corresponding to first applications, second applications, and third applications are not specifically limited in embodiments of this application.

The application framework layer provides an application programming interface (application programming interface, API) and a programming framework for the application at the application layer. The application framework layer includes some predefined functions.

As shown in FIG. 2, the application framework layer may include a window manager, a content provider, a view system, a phone manager, a resource manager, a notification manager, a parameter configuration module, and the like.

The window manager is used to manage a window program. The window manager may obtain a size of the display, determine whether there is a status bar, perform screen locking, take a screenshot, and the like.

The content provider is used to store and obtain data, and enable the data to be accessible by the application. The data may include a video, an image, an audio, calls that are made and received, a browsing history and a bookmark, a phone book, and the like.

The view system includes a visual control like a text display control or an image display control. The view system may be used to construct an application. A display interface may include one or more views. For example, a display interface including an SMS message notification icon may include a text display view and an image display view.

The phone manager is used to provide a communication function of the electronic device 100, for example, management of a call status (including answering or declining).

The resource manager provides various resources such as a localized character string, an icon, an image, a layout file, and a video file for an application.

The notification manager enables the application to display notification information in a status bar, may be used to convey a notification message, and may automatically disappear after a short pause without user interaction. For example, the notification manager is used to notify download completion and provide a message notification. The notification manager may alternatively be a notification that appears in a top status bar of the system in a form of a graph or a scroll bar text, for example, a notification of an application that runs in the background, or may be a notification that appears on a screen in a form of a dialog window. For example, text information is prompted in the status bar, an alert tone is made, the electronic device vibrates, or an indicator light blinks.

The Android runtime includes a core library and a virtual machine. The Android runtime is responsible for scheduling and management of the Android system.

The core library includes two parts: a function that needs to be invoked in a Java language, and a core library of Android.

The application layer and the application framework layer run on the virtual machine. The virtual machine executes Java files at the application layer and the application framework layer as binary files. The virtual machine is used to implement functions such as object lifecycle management, stack management, thread management, security and exception management, and garbage collection.

The system library may include a plurality of functional modules, such as a surface manager (surface manager), a media library (Media Libraries), a three-dimensional graphics processing library (for example, an OpenGL ES), and a 2D graphics engine (for example, an SGL).

The surface manager is used to manage a display subsystem and provide fusion of 2D and 3D layers for a plurality of applications.

The media library supports playback and recording in a plurality of commonly used audio and video formats, a static image file, and the like. The media library may support a plurality of audio and video encoding formats such as MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a first task group, a second task group, a statistics collection module, a strategy management and control module, and a dynamic adjustment module.

In some embodiments of this application, the parameter configuration module, the statistics collection module, the strategy management and control module, and the dynamic adjustment module are described as follows: The parameter configuration module is configured to configure group parameters corresponding to the first task group and the second task group, where the grouping parameters may include resource threshold parameters, task quantity parameters, and the like. The statistics collection module is configured to collect statistics on resource usage corresponding to the first task group and the second task group during specified periodic time, where the resource usage may be, for example, CPU execution time. The resource usage is used to subsequently determine whether resource thresholds corresponding to the groups is reached, and is used as an input of the dynamic adjustment module. The strategy management and control module is configured to determine whether the resource usage of the first task group and the second task group meets a first condition. The dynamic adjustment module is configured to adjust, when it is determined that the resource usage of the first task group and the second task group meets the first condition, the resource thresholds corresponding to the groups.

With reference to the accompanying drawings, the following specifically describes the resource control method provided in embodiments of this application. In the following embodiments, a first device (for example, a mobile phone) is still used as an example for description. The method may include the following steps.

In some embodiments of this application, to facilitate resource control, in this embodiment of this application, a plurality of task groups may be obtained in advance, and the task groups may be process groups or thread groups. For ease of description, the following uses the process groups as an example for description.

For example, the mobile phone may group all processes based on the process groups, and then integrally perform resource control, for example, time slice allocation, on different groups. In the process group, a task is a process of a system. Each process group may include one or more processes, or may not include any process.

In some embodiments of this application, in a process of obtaining the plurality of task groups, the mobile phone may obtain the task groups in advance through division based on task attributes corresponding to tasks.

Specifically, the mobile phone may obtain a first task group and a second task group through division based on a task attribute of a task corresponding to an application, where the task attribute is used to represent a delay requirement corresponding to the task. For example, a task attribute corresponding to a task in the first task group is a real-time task, and the real-time task includes a frame drawing task in an application currently used by a user and a task related to the frame drawing task, for example, a Renderservice main thread, an ArkUI application main thread, and an RSHardward thread. A task attribute corresponding to a task in the second task group is a common task (a non-real-time task), for example, a download task corresponding to a browser application running in a background and a download task corresponding to an email application running in the background. In other words, the first task group may include a real-time process corresponding to a currently started application, and the second task group may include a common process corresponding to the currently started application.

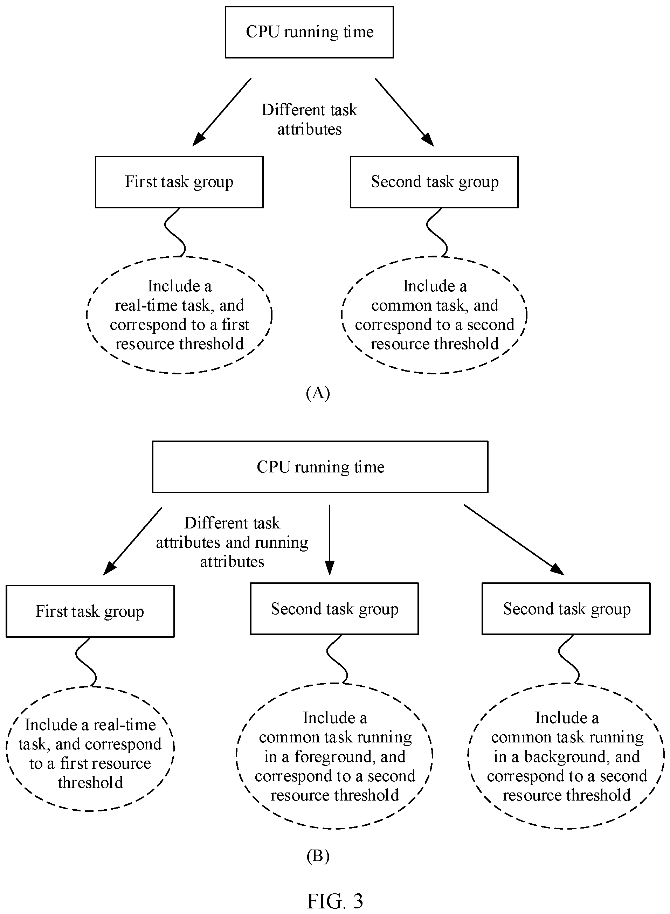

In some other embodiments of this application, as shown in (A) in FIG. 3, in the process of obtaining the plurality of task groups, the mobile phone may further obtain different task groups in advance through division based on a running attribute of the application (which may also be referred to as a task or a process).

The running attribute of the application indicates whether the application runs in a foreground or the background, and whether a process corresponding to the application is a process running in an operating system kernel or a process interacting with the user. Certainly, one or more processes corresponding to the application also have corresponding running attributes, and the running attributes of the processes indicate whether the one or more processes are foreground processes or background processes. For example, a running attribute corresponding to the task in the first task group is a foreground task, and a running attribute corresponding to the task in the second task group is a background task.

It should be noted that the task attribute and the running status of the task may be obtained based on description information corresponding to the task. For example, a process control block of a process may include process description information. The process description information may include description information such as a unique identifier, function information, a task attribute, and a running attribute of the process.

In some other embodiments of this application, as shown in (B) in FIG. 3, in the process of obtaining the plurality of task groups, the mobile phone may alternatively obtain different task groups through division based on the task attribute and the running attribute that correspond to the task.

Specifically, the mobile phone may obtain the first task group and a plurality of second task groups through division based on the task attribute and the running attribute of the task corresponding to the application.

For example, the mobile phone may obtain the first task group and the plurality of second task groups through division based on the task attribute of the task corresponding to the application. The first task group includes a real-time task, and the second task group includes a common task. The mobile phone may further divide the second task group based on the running attribute corresponding to the application, to obtain the plurality of second task groups. For example, one second task group includes a common task running in the foreground, and another second task group includes a common task running in the background.

In some embodiments of this application, a resource threshold may be a time slice threshold corresponding to a time slice of a central processing unit CPU core. The task is a process or a thread. The first task group includes a real-time task corresponding to an application currently interacting with the user. One task group in the second task groups includes a foreground task running in the foreground of the electronic device. One task group in the second task groups includes a background task running in the background of the electronic device.

For example, the first task group may be a top process group, and the second task groups may include a foreground process group and a background process group. The top process group may include a process currently related to user interaction. For example, the user currently uses a video application and a social application. The top process group may include a frame drawing process corresponding to the video application, a frame drawing process corresponding to the social application, and the like. The foreground process group may include a process running in the foreground. For example, the foreground process group may include a launcher process corresponding to a desktop application. The background process group may include a process that runs in the background and does not need to interact with the user.

It should be noted that the mobile phone may further preset a task group other than the first task group and the second task group. A quantity and names of task groups shown in this application are merely examples, and are not specifically limited in this application. In addition, division into the foregoing groups is also merely an example. This is not specifically limited in this application. It may be understood that, in this embodiment of this application, that a task group includes an application means that the group includes a process corresponding to the application. For example, the top process group includes one or more processes corresponding to the browser application.

In this way, in this embodiment of this application, different task groups can be obtained through division based on the task attributes or based on the task attributes and the running attributes, and a running task corresponding to the currently started application can be added to the different groups, to facilitate association of a large quantity of running tasks. In addition, this helps the electronic device subsequently meet an interaction priority requirement in a resource allocation process. Therefore, user experience is improved.

In some embodiments of this application, the mobile phone may further preset resource thresholds corresponding to the first task group and the second task group.

Specifically, the mobile phone may set, based on user use information within preset duration, a first resource threshold corresponding to the first task group and a second resource threshold corresponding to the second task group. The user use information may include accumulated use duration corresponding to a used application on the mobile phone and download information corresponding to the used application, for example, a count of download and installation.

For example, the mobile phone may set, based on the accumulated use duration corresponding to the used application within the preset duration, the resource thresholds corresponding to the first task group and the second task group. For example, based on daily accumulated use duration corresponding to the used application within one month, the mobile phone may determine, as a first application, an application whose daily accumulated use duration is greater than a duration threshold, and determine, as a second application or a third application, an application whose daily accumulated use duration is less than or equal to the duration threshold.

For another example, the mobile phone may alternatively set, based on the download information corresponding to the used application within the preset duration, the resource thresholds corresponding to the first task group and the second task group. For example, based on a count of download and installation corresponding to the used application in one month, the mobile phone may determine, as a first application, an application whose count of download and installation is greater than a count threshold, and determine, as a second application or a third application, an application whose count of download and installation is less than or equal to the count threshold. It should be noted that the user use information within the preset duration may be obtained by the mobile phone by using application data corresponding to the application in an application market. A manner of obtaining the user use information is not specifically limited in embodiments of this application.

In some embodiments of this application, a preset resource threshold may be a preset resource amount. In a scenario in which a resource is a CPU resource, the resource threshold may indicate a maximum value of execution time corresponding to a task in a task group. For example, the first resource threshold may be a maximum value of a time slice corresponding to the task in the first task group. The second resource threshold may be a maximum value of a time slice corresponding to the task in the second task group.

For another example, the resource threshold may alternatively indicate a maximum proportion of execution time corresponding to the task in the task group to a total CPU time slice. For example, the first resource threshold may be a maximum proportion of a time slice corresponding to the first task group to the total CPU time slice. The second resource threshold may be a maximum proportion of a time slice corresponding to the second task group to the total CPU time slice.

To prioritize a task that affects user experience more in a resource control process, according to a resource threshold setting strategy provided in this embodiment of this application, a larger resource threshold may be set for the corresponding first task group including the task currently interacting with the user. Similarly, to prevent a large quantity of tasks running in the background from preempting resources, a smaller resource threshold may be set for the corresponding second task group including the background task in the second task groups.

In some embodiments of this application, the first resource threshold corresponding to the first task group is greater than the second resource threshold corresponding to the second task group, and a second resource threshold corresponding to the second task group including the foreground task is greater than a second resource threshold corresponding to the second task group including the background task.

For ease of description, the following describes the resource threshold in a form of a proportion as an example. The first resource threshold is 80%, the second resource threshold corresponding to the second task group including the foreground task is 50%, and the second resource threshold corresponding to the second task group including the background task is 10%. For another example, the first resource threshold is 70%, the second resource threshold corresponding to the second task group including the foreground task is 55%, and the second resource threshold corresponding to the second task group including the background task is 15%. For another example, the first resource threshold is 85%, the second resource threshold corresponding to the second task group including the foreground task is 45%, and the second resource threshold corresponding to the second task group including the background task is 5%. It should be noted that values corresponding to the first resource threshold and the second resource threshold are not specifically limited in embodiments of this application.

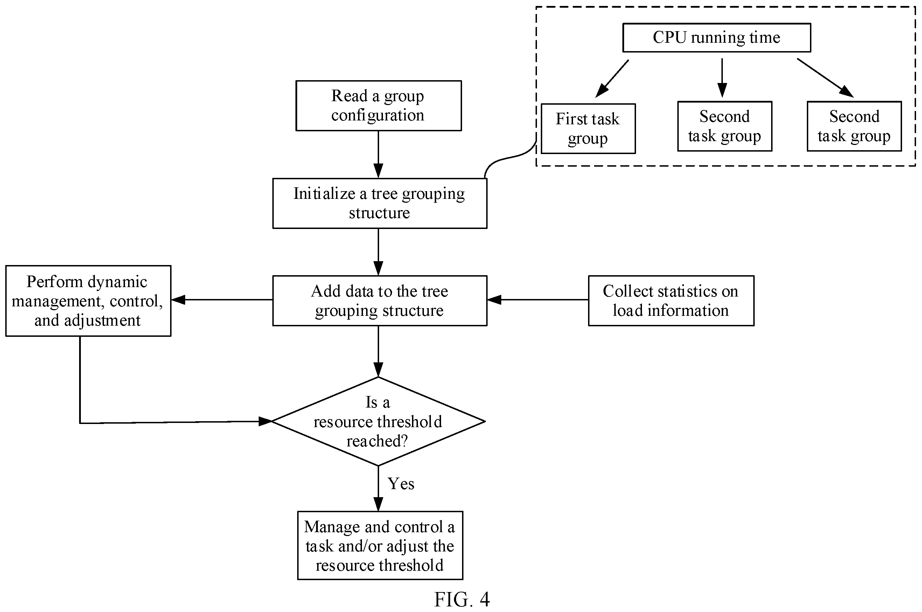

In some embodiments of this application, as shown in FIG. 4, the mobile phone may read a group configuration during system initialization. For example, the group includes the first task group, two second task groups, and a resource threshold corresponding to each task group. The mobile phone may further initialize a tree grouping structure for a configuration strategy for the different groups by using a tree grouping management and control data structure. The tree grouping structure refers to processing data in a grouping manner of a tree structure, and can clearly indicate a hierarchical relationship between the data. The tree grouping structure is generally used to process data having a parent-child relationship or a hierarchical structure. For example, a large quantity of execution tasks are divided into different task groups, and different sub-task groups may be obtained through division at a next level of each task group.

The mobile phone may collect statistics on load information, and add the data to the tree grouping structure, for example, add a corresponding task to a corresponding task group. The mobile phone may further dynamically manage, control, and adjust the task in the tree grouping structure, and when a used resource amount corresponding to the task reaches a resource threshold, manage and control the task and/or adjust the resource threshold.

In some implementations, in a process in which the mobile phone adds the data to the tree grouping structure, the mobile phone may obtain the running task corresponding to the currently started application, and add the running task to the first task group and the second task group based on a task attribute corresponding to the running task.

For example, the mobile phone may obtain all processes corresponding to the currently started application, and based on task attributes corresponding to the processes, add a real-time process to the first task group and add a common process to the second task group.

In some other implementations, the mobile phone may alternatively obtain the running task corresponding to the currently started application, and add the running task to the first task group and the second task group based on the task attribute and a running attribute that correspond to the running task.

For example, the mobile phone may obtain all processes corresponding to the currently started application, add a real-time process to the first task group, and add common processes to the second task group. Then, based on running attributes corresponding to the common processes, the mobile phone may add a common process running in the foreground to one second task group, and add a common process running in the background to another second task group.

It should be noted that a corresponding adding process of adding the running task to the task groups is not specifically limited in embodiments of this application.

In this way, in this embodiment of this application, different task groups can be obtained in advance through division, and different resource thresholds can be set for the different task groups. A resource threshold of the corresponding task group including the real-time task is high. In addition, the running task corresponding to the started application can be further added to the different task groups based on the task attribute corresponding to the task, so that a resource control process is subsequently performed based on running statuses of the tasks in the task groups. It can be learned that the different task groups are set, so that system resources can be more flexibly controlled based on features of the groups. In addition, the real-time task can use more resources in an execution process, so that a feature of interaction priority of the mobile phone can be satisfied. Therefore, user experience is improved.

In some embodiments of this application, in a process of adding the running task to the first task group and the second task group, the mobile phone may sort running tasks in ascending order based on task identifiers of the running tasks, and add the running tasks to the first task group and the second task group.

In other words, the mobile phone may sort the processes or threads in ascending order based on identifiers corresponding to the processes or the threads, for example, process IDs or thread IDs, and add the processes or the threads to the first task group and the second task group.

In this way, in this embodiment of this application, the running tasks are sorted in ascending order by using the task identifiers of the running tasks, so that a corresponding running task can be found more quickly. For example, retrieval can be performed according to a binary search algorithm, to improve search efficiency. In addition, it can also be convenient to subsequently collect statistics on resource usage corresponding to the running tasks in the first task group and the second task group, thereby improving statistics collection efficiency.

In some embodiments of this application, the mobile phone may obtain, in a preset period, resource usage corresponding to different task groups, and dynamically adjust and control corresponding resource thresholds and limit a task in a task group based on the resource usage of the different task groups.

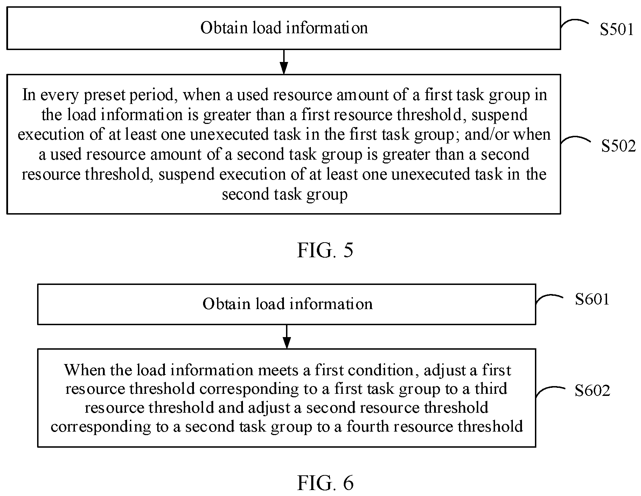

In some embodiments, as shown in FIG. 5, the mobile phone may further obtain load information (step 501). The load information is used to represent resource usage corresponding to the tasks in the first task group and the second task group. In every preset period, when a used resource amount of the first task group in the load information is greater than the first resource threshold, the mobile phone may further suspend execution of at least one unexecuted task in the first task group; and/or when a used resource amount of the second task group is greater than the second resource threshold, suspend execution of at least one unexecuted task in the second task group (step 502).

For example, the first resource threshold is 80%, and the second resource threshold is 50%. The mobile phone may obtain, in every preset period, core time slices corresponding to the processes in the first task group and the second task group.

For example, the mobile phone obtains, every 5 seconds, the core time slices corresponding to the processes in the first task group and the second task group. If a proportion of the core time slice corresponding to the process in the first task group to the total CPU time slice is less than 80%, and a proportion of the core time slice corresponding to the process in the second task group to the total CPU time slice is greater than 50%, the mobile phone may limit the process in the second task group in a next preset period, in other words, suspend execution of at least one unexecuted process in the second task group, and do not allocate a CPU resource to the at least one unexecuted process in the second task group, in other words, reduce execution of the task in the task group. This helps preferably schedule a task in another task group.

For another example, the mobile phone obtains, every 10 seconds, the core time slices corresponding to the processes in the first task group and the second task group. If a proportion of the core time slice corresponding to the process in the first task group to the total CPU time slice is greater than 80%, and a proportion of the core time slice corresponding to the process in the second task group to the total CPU time slice is less than 50%, the mobile phone may limit the process in the first task group in a next preset period, in other words, suspend execution of at least one unexecuted process in the first task group, and do not allocate a CPU resource to the at least one unexecuted process in the first task group, in other words, reduce execution of the task in the task group. This helps preferably schedule a task in another task group.

It should be noted that a specific value corresponding to the preset period is not limited in this application.

In this way, in this embodiment of this application, the task can be controlled in the preset period based on a running status of the task in the task group. Specifically, when the used resource amount of the task in the task group is greater than the resource threshold, execution of the at least one unexecuted task in the task group is suspended. This prevents a large quantity of background tasks from being created by a background application and occupying a large quantity of resources, and prevents resource abuse from affecting system stability and performance. Therefore, user experience is improved.

In some embodiments, as shown in FIG. 6, the mobile phone may further obtain load information (step 601). When the load information meets a first condition, the mobile phone may further adjust the first resource threshold corresponding to the first task group to a third resource threshold and adjust the second resource threshold corresponding to the second task group to a fourth resource threshold (step 602).

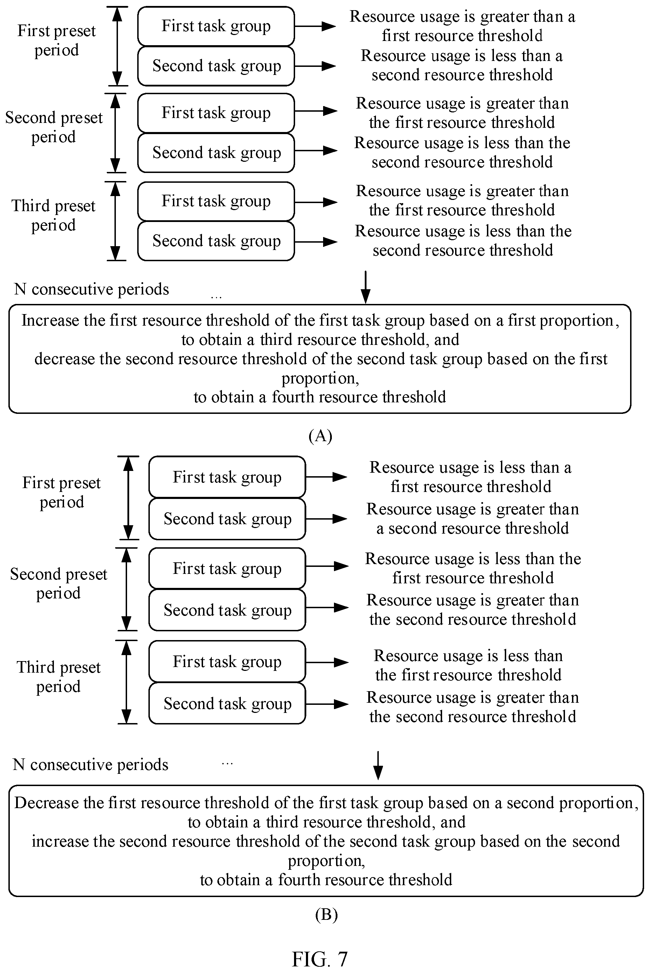

Specifically, as shown in (A) in FIG. 7, the mobile phone may increase the first resource threshold and decrease the second resource threshold when the used resource amount of the first task group in the load information is greater than the first resource threshold and the used resource amount of the second task group is less than the second resource threshold in N consecutive preset periods. Specifically, the first resource threshold is increased based on a first proportion, to obtain the third resource threshold, and the second resource threshold is decreased based on the first proportion, to obtain the fourth resource threshold, where N is greater than 1.

Alternatively, as shown in (B) in FIG. 7, the mobile phone may decrease the first resource threshold and increase the second resource threshold in the next preset period when the used resource amount of the first task group is less than the first resource threshold and the used resource amount of the second task group is greater than the second resource threshold in the N consecutive preset periods. Specifically, the first resource threshold is decreased based on a second proportion, to obtain the third resource threshold, and the second resource threshold is increased based on the second proportion, to obtain the fourth resource threshold, where N is greater than 1.

For example, the first resource threshold is 80%, and the second resource threshold is 50%. The mobile phone may obtain core time slices corresponding to the processes in the first task group and the second task group in the N consecutive preset periods. For example, the mobile phone obtains core time slices corresponding to the processes in the first task group and the second task group in three consecutive preset periods, for example, 15 seconds. In the three consecutive preset periods, if proportions of the core time slices corresponding to the process in the first task group to the total CPU time slice are all greater than 80% and proportions of the core time slices corresponding to the process in the second task group to the total CPU time slice are all less than 50%, the mobile phone may increase the first resource threshold to the third resource threshold, for example, 90%, and decrease the second resource threshold to the fourth resource threshold, for example, 40%, based on the second proportion in a next preset period.

For another example, the mobile phone obtains core time slices corresponding to the processes in the first task group and the second task group in three consecutive preset periods, for example, 15 seconds. In the three consecutive preset periods, if proportions of the core time slices corresponding to the process in the first task group to the total CPU time slice are all less than 80% and proportions of the core time slices corresponding to the process in the second task group to the total CPU time slice are all greater than 50%, the mobile phone may decrease the first resource threshold to the third resource threshold, for example, 70%, and increase the second resource threshold to the fourth resource threshold, for example, 60%, based on the first proportion in a next preset period.

In this way, in this embodiment of this application, the load information in the N consecutive preset periods can be further determined. In the N consecutive preset periods, if a used resource amount of one task group in two task groups is greater than a corresponding resource threshold, and a used resource amount of the other task group is less than a corresponding resource threshold, the resource threshold of the corresponding task group whose used resource amount is greater than the resource threshold is increased, and the resource threshold of the corresponding task group whose used resource amount is less than the resource threshold is decreased. In a scenario in which a used resource amount corresponding to a task group is greater than a resource threshold, the resource threshold of the task group is dynamically adjusted, so that more resources can be allocated to the task that affects user experience more, and running requirements of a foreground and a background of the mobile phone can be further met to a maximum extent. This satisfies a diversity of system running environments to a maximum extent, and ensures a running requirement of a mobile phone system.

In some embodiments of this application, the mobile phone may determine the first proportion based on a difference between the used resource amount of the second task group and the second resource threshold. The mobile phone may further determine the second proportion based on a difference between the used resource amount of the first task group and the first resource threshold.

In some implementations, the mobile phone may determine a first difference between the second resource threshold and the used resource amount of the second task group in the N consecutive preset periods, and assign a preset weight to the first difference, to obtain the first proportion.

For example, the preset first resource threshold of the first task group is 80%, and the preset second resource threshold of the second task group is 50%.

For example, in a 1^{st} preset period, the proportion of the core time slice corresponding to the process in the first task group to the total CPU time slice is 90%, and the proportion of the core time slice corresponding to the process in the second task group to the total CPU time slice is 10%. In a 2^{nd} preset period, the proportion of the core time slice corresponding to the process in the first task group to the total CPU time slice is 90%, and the proportion of the core time slice corresponding to the process in the second task group to the total CPU time slice is 20%. It can be learned that, in two consecutive preset periods, the proportions of the core time slices corresponding to the process in the first task group to the total CPU time slice are both greater than 80%, and the proportions of the core time slices corresponding to the process in the second task group to the total CPU time slice are both less than 50%.

The mobile phone determines that the first difference between the second resource threshold and the used resource amount of the second task group in the two consecutive preset periods is 70%. Specifically, in the 1^{st} preset period, a difference between the second resource threshold and a used resource amount of the second task group is 40%. In the 2^{nd} preset period, a difference between the second resource threshold and a used resource amount of the second task group is 30%. In this case, the corresponding differences in the two preset periods are added to obtain the first difference being 70%. The mobile phone may assign the preset weight, for example, 0.1, to the first difference, to obtain the first proportion being 7%. In this way, the mobile phone may subsequently increase the first resource threshold to the third resource threshold being 87%, and decrease the second resource threshold to the fourth resource threshold being 43%.

In some other implementations, the mobile phone may determine an average difference between the second resource threshold and used resource amounts of the second task group in the N preset periods, and assign a preset weight to the average difference, to obtain the first proportion.

In some implementations, the mobile phone may determine a second difference between the first resource threshold and the used resource amount of the first task group in the N consecutive preset periods, and assign the preset weight to the second difference, to obtain the second proportion. It should be noted that a process of obtaining the second proportion is similar to the foregoing process of obtaining the first proportion. Details are not described herein again.

In some other implementations, the mobile phone may alternatively determine the first proportion based on a difference between the used resource amount of the first task group and the first resource threshold. Certainly, the mobile phone may alternatively determine the second proportion based on a difference between the used resource amount of the second task group and the second resource threshold.

It should be noted that the foregoing processes of obtaining the first proportion and the second proportion are merely examples for description. This is not specifically limited in embodiments of this application. In addition, specific values corresponding to the first proportion and the second proportion are not limited in embodiments of this application.

In this way, in this embodiment of this application, in a process of adjusting the resource threshold, adjustment may be performed based on a difference between a used resource amount of a corresponding task group whose used resource amount exceeds a resource threshold and the resource threshold of the task group. In other words, when the used resource amount of the task group does not exceed the resource threshold, not all unused resources of all resources are allocated to a corresponding task group whose used resource amount exceeds a resource threshold. Instead, an appropriate proportion is determined based on the difference between the used resource amount and the resource threshold of the task group, to adjust the resource thresholds of the two task groups. In this way, the system resources are allocated as evenly as possible, and running requirements corresponding to the two task groups are met at the same time, thereby improving system stability and performance.

In some embodiments of this application, in N accumulated preset periods within preset duration, when a used resource amount of the first task group in the load information is greater than the first resource threshold, and a used resource amount of the second task group is less than the second resource threshold, based on a first proportion, the mobile phone may further increase the first resource threshold to obtain the third resource threshold, and decrease the second resource threshold to obtain the fourth resource threshold; or
in the N accumulated preset periods within the preset duration, when the used resource amount of the first task group is less than the first resource threshold, and the used resource amount of the second task group is greater than the second resource threshold, based on a second proportion, decrease the first resource threshold to obtain the third resource threshold, and increase the second resource threshold to obtain the fourth resource threshold, where N is greater than 1.

In other words, the mobile phone may further set preset duration, where the preset duration is greater than the N preset periods. In this way, the mobile phone can further adjust the first resource threshold and the second resource threshold when the used resource amount of the first task group in the load information is greater than the first resource threshold and the used resource amount of the second task group is less than the second resource threshold in a plurality of accumulated preset periods within specific preset duration.

Alternatively, the mobile phone can further adjust the first resource threshold and the second resource threshold when the used resource amount of the first task group in the load information is less than the first resource threshold and the used resource amount of the second task group is greater than the second resource threshold in the plurality of accumulated preset periods within the specific preset duration.

In this way, in this embodiment of this application, the load information in the N accumulated preset periods within the preset duration can be further determined. In the N accumulated preset periods within the preset duration, if a used resource amount of one task group in two task groups is greater than a corresponding resource threshold, and a used resource amount of the other task group is less than a corresponding resource threshold, the resource threshold of the corresponding task group whose used resource amount is greater than the resource threshold is increased, and the resource threshold of the corresponding task group whose used resource amount is less than the resource threshold is decreased. In a scenario in which a used resource amount corresponding to a task group is greater than a resource threshold, the resource threshold of the task group can be dynamically adjusted more flexibly, so that more resources can be allocated to the task that affects user experience more, and running requirements of a foreground and a background of the mobile phone can be further met to a maximum extent. Running requirements corresponding to different task groups are met to a maximum extent, thereby improving system stability and performance.

In some embodiments of this application, the electronic device may include a plurality of second task groups. According to the foregoing strategy, in the N consecutive preset periods, in the first task group and the plurality of second task groups, when a used resource amount of a first target task group is greater than a resource threshold corresponding to the first target task group, and a used resource amount of a second target task group is less than a resource threshold corresponding to the second target task group, the mobile phone may increase the resource threshold of the first target task group and decrease the resource threshold of the second target task group based on a third proportion.

For example, in three consecutive preset periods, in the first task group and the plurality of second task groups, the mobile phone may determine, as the first target task group, a task group whose used resource amount is greater than a resource threshold corresponding to the task group, and determine, as the second target task group, a task group whose used resource amount is less than a resource threshold corresponding to the task group. In addition, the resource threshold of the first target task group is increased and the resource threshold of the second target task group is decreased based on the third proportion.

In other words, in this embodiment of this application, in the N consecutive preset periods, when one task group in the first task group and the plurality of second task groups exceeds an upper limit, and another task group does not exceed an upper limit, a resource threshold of the corresponding task group that exceeds the upper limit can be increased, and a resource threshold of the corresponding task group that does not exceed the upper limit can be decreased.

In the first task group and the plurality of second task groups, used resource amounts of a plurality of task groups may be greater than resource thresholds corresponding to the plurality of task groups, and used resource amounts of a plurality of task groups may also be less than resource thresholds corresponding to the plurality of task groups. In other words, the first target task group and the second target task group correspond to one task group, or may correspond to the plurality of task groups.

In an implementation, if used resource amounts of the first task group and one second task group in the plurality of second task groups are greater than resource thresholds corresponding to the first task group and second task group, in other words, the first target task group includes the first task group and the second task group, the mobile phone may preferably increase the resource threshold corresponding to the first task group.

For example, the first task group is still a top process group, and the second task group still includes a foreground process group and a background process group. Used resource amounts corresponding to the top process group and the foreground process group are both greater than resource thresholds corresponding to the top process group and the foreground process group, and a used resource amount corresponding to the background process group is less than a resource threshold corresponding to the background process group, in other words, the first target task group is the top process group and the foreground process group, and the second target task group is the background process group. The mobile phone may increase, based on the third proportion, the resource threshold corresponding to the top process group, and decrease, based on the third proportion, the resource threshold corresponding to the background process group.

In another implementation, if the used resource amount of the first task group is less than the resource threshold corresponding to the first task group, and a used resource amount of one second task group in the plurality of second task groups is less than a resource threshold corresponding to the second task group, in other words, the second target task group includes the first task group and the second task group, the mobile phone may preferably decrease the resource threshold corresponding to the second task group.

For example, the used resource amount corresponding to the foreground process group is greater than the resource threshold corresponding to the foreground process group, and the used resource amounts corresponding to the top process group and the background process group are less than the resource thresholds corresponding to the top process group and the background process group, in other words, the first target task group is the foreground process group, and the second target task group is the top process group and the background process group. The mobile phone may increase, based on the third proportion, the resource threshold corresponding to the foreground process group, and decrease, based on the third proportion, the resource threshold corresponding to the background process group.

In this way, in this embodiment of this application, when there are a plurality of task groups, the load information in the N consecutive preset periods can also be determined. Resource thresholds of the plurality of task groups can be dynamically adjusted, so that running requirements corresponding to different task groups can be met to a maximum extent, and adjustment flexibility and system stability and performance are improved.

In some embodiments of this application, the mobile phone may further divide different groups into different subgroups according to a preset rule, and set corresponding sub-resource thresholds for the different subgroups.

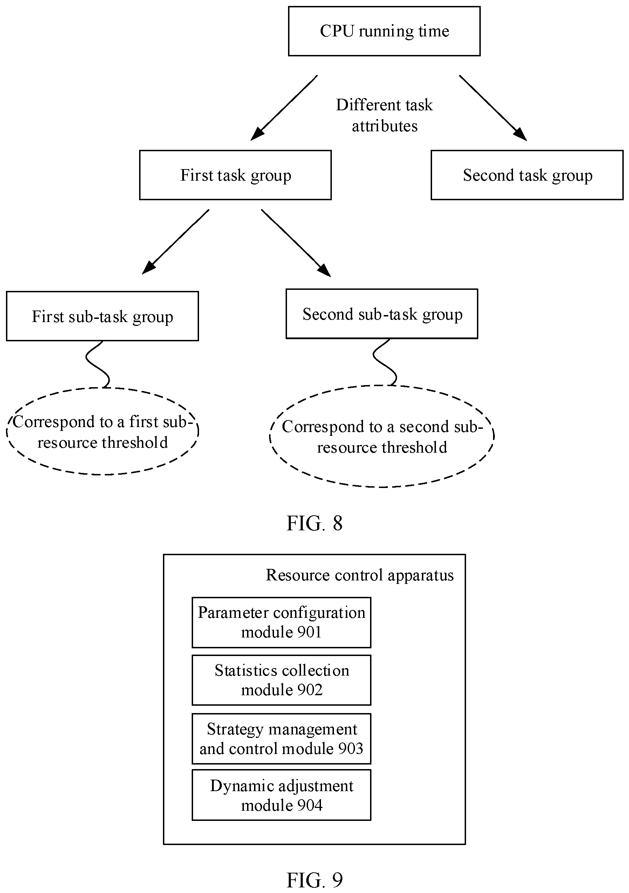

In some implementations, the mobile phone may divide the first task group based on priorities corresponding to real-time tasks. As shown in FIG. 8, for example, the first task group includes a first sub-task group and a second sub-task group, and a priority corresponding to a real-time task in the first sub-task group is higher than a priority corresponding to a real-time task in the second sub-task group.

The first sub-task group corresponds to a first sub-resource threshold, and the second sub-task group corresponds to a second sub-resource threshold. The first sub-resource threshold and the second sub-resource threshold may also be set based on the priorities corresponding to the real-time tasks. For example, in the real-time tasks, a priority of a download task is lower than that of a drawing task. In this case, the first sub-resource threshold corresponding to the first sub-task group including the drawing task is greater than the second sub-resource threshold corresponding to the second sub-task group including the download task.

In some other implementations, the mobile phone may alternatively divide the first task group based on a quantity corresponding to real-time tasks. For example, the first sub-task group and the second sub-task group are included. A quantity corresponding to real-time tasks in the first sub-task group may be the same as or different from a quantity corresponding to real-time tasks in the second sub-task group.

When the quantity of real-time tasks in the first sub-task group is the same as the quantity of real-time tasks in the second sub-task group, the first sub-resource threshold is equal to the second sub-resource threshold. When the quantity of real-time tasks in the first sub-task group is different from the quantity of real-time tasks in the second sub-task group, a sub-resource threshold of a task group with a larger quantity is greater than a sub-resource threshold of a task group with a smaller quantity.

In some embodiments of this application, the mobile phone may further obtain load information of the first sub-task group and load information of the second sub-task group. When the load information of the first sub-task group and the load information of the second sub-task group meet a second condition, the mobile phone may further adjust the first sub-resource threshold corresponding to the first sub-task group to a third sub-resource threshold and adjust the second sub-resource threshold corresponding to the second sub-task group to a fourth sub-resource threshold.

Specifically, in the N consecutive preset periods, in the first sub-task group and the second sub-task group, when a used resource amount of a third target task group is greater than a resource threshold corresponding to the third target task group, and a used resource amount of a fourth target task group is less than a resource threshold corresponding to the fourth target task group, the mobile phone may increase the resource threshold of the third target task group based on a fourth proportion, and decrease the resource threshold of the fourth target task group based on the fourth proportion.

In other words, in this embodiment of this application, in the N consecutive preset periods, when one sub-task group in the first sub-task group and the second sub-task group exceeds an upper limit, and the other sub-task group does not exceed an upper limit, a resource threshold of the corresponding sub-task group that exceeds the upper limit can be increased, and a resource threshold of the corresponding sub-task group that does not exceed the upper limit can be decreased.

It should be noted that a process of adjusting the sub-resource threshold corresponding to the sub-task group is similar to the foregoing process of adjusting the resource threshold corresponding to the task group. Details are not described herein again. The first proportion, the second proportion, the third proportion, and the fourth proportion may be the same or different. In this embodiment of this application, processes of determining the first proportion, the second proportion, the third proportion, and the fourth proportion may be the same or different. The determining processes corresponding to the first proportion, the second proportion, the third proportion, and the fourth proportion are not specifically limited.

In this way, in this embodiment of this application, next-level grouping can be further performed on different task groups, to further obtain different subgroups. Grouping can facilitate management of a large quantity of tasks. Specifically, grouping may be performed based on different priorities of real-time tasks. This is more conducive to meeting an interaction priority requirement of the electronic device.

Similarly, sub-resource thresholds corresponding to different subgroups can also be dynamically adjusted. Specifically, the sub-resource thresholds of the subgroups may be the same, which can reflect fairness of threshold setting. Therefore, adjustment flexibility is improved.

In some embodiments of this application, in a running process of the mobile phone, running attributes of tasks in different task groups change with time. In other words, the task in the first task group and the task in the second task group are not fixed. The mobile phone may dynamically adjust the tasks in the first task group and the second task group with time, for example, dynamically add a process to the task group, or delete a process from the task group.

Specifically, the mobile phone may further listen to each task that is running, for example, listen to a status change of each process that is running. When detecting that a foreground/background state of the process changes, the mobile phone may determine whether a running state of the process after the change is foreground running or background running.

For example, a list of all processes that are running is obtained once every 5 seconds, and whether statuses of the processes that are running in the process list are foreground running or background running are determined one by one. A current running state of the process may be compared with a previous running state. If the previous running state of the process is different from the current running state, it may be determined that the foreground/background state of the process changes. The mobile phone may determine the current running state of the process, and after determining the running state, add the process to a corresponding task group.

For example, for a new interaction process, if the mobile phone determines that a running state of the interaction process is foreground running and a corresponding task attribute is a real-time task, the mobile phone adds the interaction process to the first task group. For a download process, if the mobile phone determines that a running state of the download process is background running, the mobile phone adds the background running to the second task group.

In this way, in this embodiment of this application, when a running state of a task changes, the task in a task group can be dynamically adjusted, to set the task in an appropriate task group. In this way, when load information corresponding to the task group is obtained and a resource threshold is adjusted subsequently, it can be ensured that each task can be supplied in time, thereby implementing flexibility and dynamism of resource control.

An embodiment of this application further provides a resource control apparatus. The resource control apparatus may be used in an electronic device, or may be disposed independently. As shown in FIG. 9, the resource control apparatus includes a parameter configuration module 901, a statistics collection module 902, a strategy management and control module 903, and a dynamic adjustment module 904.

The parameter configuration module 901 is configured to configure a first resource threshold corresponding to a first task group and a second resource threshold corresponding to a second task group, where the first task group includes a real-time task corresponding to an application currently interacting with a user, the first resource threshold corresponding to the first task group is greater than the second resource threshold corresponding to the second task group, and a resource threshold is used to represent maximum resource usage corresponding to a task in a task group.

The statistics collection module 902 is configured to obtain load information, where the load information is used to represent resource usage corresponding to tasks in the first task group and the second task group.

The strategy management and control module 903 is configured to determine that the load information meets a first condition.

The dynamic adjustment module 904 is configured to: when the load information meets the first condition, adjust the first resource threshold corresponding to the first task group to a third resource threshold and adjust the second resource threshold corresponding to the second task group to a fourth resource threshold.

In some solutions, a plurality of embodiments of this application may be combined, and a combined solution is implemented. Optionally, some operations in the procedures of the method embodiments are optionally combined, and/or a sequence of some operations is optionally changed. In addition, an execution sequence of the steps of the procedures is merely an example, and does not constitute a limitation on the execution sequence of the steps. The steps may alternatively be in another execution sequence. This is not intended to indicate that the execution sequence is the only sequence in which these operations can be performed.

A person of ordinary skill in the art may figure out a plurality of manners to reorder the operations described in embodiments of this application. In addition, it should be noted that process details in an embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

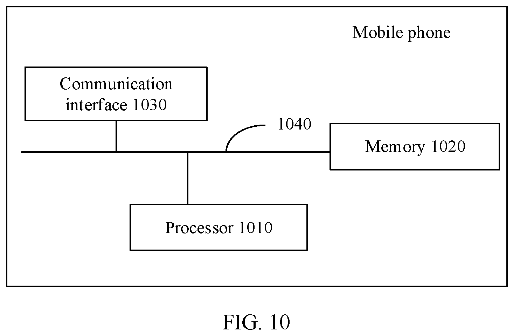

An embodiment of this application further provides an electronic device. For example, the electronic device may be the foregoing mobile phone. As shown in FIG. 10, the mobile phone may include one or more processors 1010, a memory 1020, and a communication interface 1030.

The memory 1020 and the communication interface 1030 are coupled to the processor 1010. For example, the memory 1020 and the communication interface 1030 may be coupled to the processor 1010 via a bus 1040.

The communication interface 1030 is configured to perform data transmission with another device. The memory 1020 stores computer program code. The computer program code includes computer instructions. When the computer instructions are executed by the processor 1010, the electronic device is enabled to perform related method steps in embodiments of this application.

The processor 1010 may be a processor or a controller, and may be, for example, a central processing unit (central processing unit, CPU), a general-purpose processor, a digital signal processor (digital signal processor DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content of this disclosure. The processor may alternatively be a combination for implementing a computing function, for example, a combination including one or more microprocessors, or a combination of a DSP and a microprocessor.

The bus 1040 may be a peripheral component interconnect (peripheral component interconnect, PCI) bus, an extended industry standard architecture (extended industry standard architecture, EISA) bus, or the like. The bus 1040 may be classified into an address bus, a data bus, a control bus, and the like. For ease of representation, only one thick line is for representing the bus in FIG. 10, but this does not mean that there is only one bus or only one type of bus.

An embodiment of this application further provides an electronic device. The electronic device includes a memory and one or more processors. The memory is coupled to the processor. The memory stores computer program code, and the computer program code includes computer instructions. When the computer instructions are executed by the processor, the electronic device is enabled to perform related method steps in the foregoing method embodiments.

An embodiment of this application further provides a communication apparatus. The communication apparatus includes a memory and one or more processors. The memory is coupled to the processor. The memory stores computer program code, and the computer program code includes computer instructions. When the computer instructions are executed by the processor, the communication apparatus is enabled to perform related method steps in the foregoing method embodiments.

An embodiment of this application further provides a computer-readable storage medium. The computer storage medium stores computer program code. When the foregoing processor executes the computer program code, an electronic device performs related method steps in the foregoing method embodiments.

An embodiment of this application further provides a computer program product. The computer program product includes instructions. When the instructions are run on a computer or a processor, the computer or the processor is enabled to perform related method steps in the foregoing method embodiments.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by hardware, or may be implemented by software. When being implemented by the hardware, the processor may be a logic circuit, an integrated circuit, or the like. When being implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

The electronic device, the computer storage medium, or the computer program product provided in this application is configured to perform the corresponding method provided above. Therefore, for beneficial effect that can be achieved by the electronic device, the computer storage medium, or the computer program product, refer to the beneficial effect in the corresponding method provided above. Details are not described herein again.

The foregoing descriptions of the implementations allow a person skilled in the art to clearly understand that, for the purpose of convenient and brief description, division into the foregoing functional modules is only used as an example for description. During actual application, the foregoing functions may be allocated to different functional modules for implementation based on a requirement, in other words, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented via some interfaces. The indirect couplings or communication connections between the apparatuses or units may be implemented in electronic, mechanical, or other forms.

The units described as separate parts may or may not be physically separate, and parts displayed as units may be one or more physical units, in other words, may be located in one place, or may be distributed in different places. A part or all of the units may be selected based on an actual requirement, to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The integrated unit may be stored in a readable storage medium when being implemented in the form of the software functional unit and sold or used as an independent product. Based on such an understanding, the technical solutions in embodiments of this application essentially, or the part making a contribution, or all or a part of the technical solutions may be implemented in a form of a software product. The software product is stored in a storage medium, and includes several instructions for instructing a device (which may be a single-chip microcomputer, a chip or the like) or a processor (processor) to perform all or a part of the steps of the methods described in embodiments of this application. The storage medium includes any medium that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A resource control method, applied to an electronic device, wherein the electronic device comprises a first task group and a second task group, and the method comprises:
obtaining load information, wherein the load information is used to represent resource usage corresponding to tasks in the first task group and the second task group, the first task group comprises a real-time task corresponding to an application currently interacting with a user, a first resource threshold corresponding to the first task group is greater than a second resource threshold corresponding to the second task group, and a resource threshold is used to represent maximum resource usage corresponding to a task in a task group; and
when the load information meets a first condition, adjusting the first resource threshold corresponding to the first task group to a third resource threshold and adjusting the second resource threshold corresponding to the second task group to a fourth resource threshold.

2. The method according to claim 1, wherein when the load information meets the first condition, adjusting the first resource threshold to the third resource threshold and adjusting the second resource threshold to the fourth resource threshold comprise:
in N consecutive preset periods, when a used resource amount of the first task group in the load information is greater than the first resource threshold, and a used resource amount of the second task group is less than the second resource threshold, increasing the first resource threshold based on a first proportion, to obtain the third resource threshold, and decreasing the second resource threshold based on the first proportion, to obtain the fourth resource threshold; or
in the N consecutive preset periods, when the used resource amount of the first task group is less than the first resource threshold, and the used resource amount of the second task group is greater than the second resource threshold, decreasing the first resource threshold based on a second proportion, to obtain the third resource threshold, and increasing the second resource threshold based on the second proportion, to obtain the fourth resource threshold, wherein N is greater than 1.

3. The method according to claim 2, wherein the method further comprises:
determining the first proportion based on a difference between the used resource amount of the second task group and the second resource threshold; and
determining the second proportion based on a difference between the used resource amount of the first task group and the first resource threshold.

4. The method according to any one of claims 1 to 3, wherein the method further comprises:
In every preset period, when the used resource amount of the first task group in the load information is greater than the first resource threshold, suspending execution of at least one unexecuted task in the first task group; and/or when the used resource amount of the second task group is greater than the second resource threshold, suspending execution of at least one unexecuted task in the second task group.

5. The method according to claim 1, wherein when the load information meets the first condition, adjusting the first resource threshold to the third resource threshold and adjusting the second resource threshold to the fourth resource threshold comprise:
in N accumulated preset periods within preset duration, when a used resource amount of the first task group in the load information is greater than the first resource threshold, and a used resource amount of the second task group is less than the second resource threshold, increasing the first resource threshold based on a first proportion, to obtain the third resource threshold, and decreasing the second resource threshold based on the first proportion, to obtain the fourth resource threshold; or
in the N accumulated preset periods within the preset duration, when the used resource amount of the first task group is less than the first resource threshold, and the used resource amount of the second task group is greater than the second resource threshold, decreasing the first resource threshold based on a second proportion, to obtain the third resource threshold, and increasing the second resource threshold based on the second proportion, to obtain the fourth resource threshold, wherein N is greater than 1.

6. The method according to any one of claims 1 to 5, wherein the method further comprises:
obtaining the first task group and the second task group through division based on a task attribute of a task corresponding to the application, wherein the task attribute is used to represent a delay requirement corresponding to the task;
obtaining a running task corresponding to a currently started application; and
adding the running task to the first task group and the second task group based on a task attribute corresponding to the running task.

7. The method according to any one of claims 1 to 6, wherein the electronic device comprises a plurality of second task groups, and adjusting the first resource threshold corresponding to the first task group to the third resource threshold and adjusting the second resource threshold corresponding to the second task group to the fourth resource threshold comprise:
in the N consecutive preset periods, in the first task group and the plurality of second task groups, when a used resource amount of a first target task group is greater than a resource threshold corresponding to the first target task group, and a used resource amount of a second target task group is less than a resource threshold corresponding to the second target task group, increasing the resource threshold of the first target task group based on a third proportion, and decreasing the resource threshold of the second target task group based on the third proportion.

8. The method according to any one of claims 1 to 7, wherein the first task group comprises a first sub-task group and a second sub-task group, the first sub-task group corresponds to a first sub-resource threshold, and the second sub-task group corresponds to a second sub-resource threshold; and obtaining the load information comprises:
obtaining load information of the first sub-task group and load information of the second sub-task group; and
the method further comprises:
when the load information of the first sub-task group and the load information of the second sub-task group meet a second condition, adjusting the first sub-resource threshold corresponding to the first sub-task group to a third sub-resource threshold and adjusting the second sub-resource threshold corresponding to the second sub-task group to a fourth sub-resource threshold.

9. The method according to claim 8, wherein when the load information of the first sub-task group and the load information of the second sub-task group meet the second condition, adjusting the first sub-resource threshold corresponding to the first sub-task group to the third sub-resource threshold and adjusting the second sub-resource threshold corresponding to the second sub-task group to the fourth sub-resource threshold comprise:
in the N consecutive preset periods, in the first sub-task group and the second sub-task group, when a used resource amount of a third target task group is greater than a resource threshold corresponding to the third target task group, and a used resource amount of a fourth target task group is less than a resource threshold corresponding to the fourth target task group, increasing the resource threshold of the third target task group based on a fourth proportion, and decreasing the resource threshold of the fourth target task group based on the fourth proportion.

10. The method according to claim 7, wherein the resource threshold is a time slice threshold corresponding to a time slice of a central processing unit CPU core, the task is a process or a thread, the first task group comprises the real-time task corresponding to the application currently interacting with the user, one task group in the second task groups comprises a foreground task running in a foreground of the electronic device, and one task group in the second task groups comprises a background task running in a background of the electronic device.

11. The method according to claim 10, wherein a second resource threshold corresponding to the second task group comprising the foreground task is greater than a second resource threshold corresponding to the second task group comprising the background task.

12. The method according to claim 6, wherein adding the running task to the first task group and the second task group comprises:
sorting the running tasks in ascending order based on task identifiers of the running tasks, and adding the running tasks to the first task group and the second task group.

13. A resource control apparatus, wherein the resource control apparatus comprises a parameter configuration module, a statistics collection module, a strategy management and control module, and a dynamic adjustment module, wherein
the parameter configuration module is configured to configure a first resource threshold corresponding to a first task group and a second resource threshold corresponding to a second task group, wherein the first task group comprises a real-time task corresponding to an application currently interacting with a user, the first resource threshold corresponding to the first task group is greater than the second resource threshold corresponding to the second task group, and a resource threshold is used to represent maximum resource usage corresponding to a task in a task group;
the statistics collection module is configured to obtain load information, wherein the load information is used to represent resource usage corresponding to tasks in the first task group and the second task group;
the strategy management and control module is configured to determine that the load information meets a first condition; and
the dynamic adjustment module is configured to: when the load information meets the first condition, adjust the first resource threshold corresponding to the first task group to a third resource threshold and adjust the second resource threshold corresponding to the second task group to a fourth resource threshold.

14. An electronic device, wherein the electronic device comprises a memory and one or more processors, the memory is coupled to the processor, the memory stores computer program code, the computer program code comprises computer instructions, and when the computer instructions are executed by the processor, the electronic device is enabled to perform the method according to any one of claims 1 to 12.

15. A computer-readable medium, wherein the computer-readable storage medium stores instructions, and when the instructions are run on an electronic device, the electronic device is enabled to perform the method according to any one of claims 1 to 12.

16. A computer program product, wherein the computer program product comprises instructions, and when the instructions are run on a computer or a processor, the computer or the processor is enabled to perform the method according to any one of claims 1 to 12.
